# EUROPÄISCHE PATENTSCHRIFT

(11) **EP 3 105 188 B1**
(45) Veröffentlichungstag und Bekanntmachung des Hinweises auf die Patenterteilung: **03.10.2018**
(21) Anmeldenummer: 15707566.4
(22) Anmeldetag: 12.02.2015
(51) Int. Cl.: C02F 1/42, C02F 1/44

(54) **VORRICHTUNG ZUR WASSERAUFBEREITUNG**
DEVICE FOR WATER TREATMENT
DISPOSITIF DE TRAITEMENT DE L'EAU

(30) Priorität: 14.02.2014 DE 102014101890
(43) Veröffentlichungstag der Anmeldung: 21.12.2016
(73) Patentinhaber: BWT AG, 5310 Mondsee (AT)
(72) Erfinder: JOHANN, Jürgen, 69226 Nußloch (DE)
(74) Vertreter: Blumbach · Zinngrebe Patent- und Rechtsanwälte
(86) Internationale Anmeldenummer: PCT/EP2015/052961
(87) Internationale Veröffentlichungsnummer: WO 2015/121347

(56) Entgegenhaltungen:
- EP-A1- 1 752 421
- GB-A- 2 498 987
- US-A- 4 828 691
- US-A1- 2013 199 974
- US-B1- 7 514 004

## Beschreibung

### Gebiet der Erfindung

Die Erfindung betrifft eine Vorrichtung zur Aufbereitung von Trinkwasser welche insbesondere im Haushaltsbereich verwendet wird.

Insbesondere betrifft die Erfindung eine Vorrichtung zur Teilentsalzung bzw. Wasseraufbereitung von Trinkwasser, welche in einer Kanne zur Aufbewahrung von Wasser, insbesondere von Trinkwasser, aber auch von demineralisiertem Wasser verwendet wird. Weiter kann die Erfindung beispielsweise auch zur Teilentsalzung bzw. Entcarbonisierung des Wassers in einem Tank verwendet werden, wie dieser insbesondere bei Maschinen zur Zubereitung von Heißgetränken, insbesondere von Kaffeevollautomaten, verwendet wird.

### Hintergrund der Erfindung

Vorrichtungen zur Wasseraufbereitung, welche insbesondere in Haushaltsgeräten Verwendung finden, sind bekannt.

Eine häufig verwendete Anwendung sind schwerkraftbetriebene Trinkwasserfilter. Diese bestehen in der Regel aus einer Kanne mit einem Trichter. In den Trichter wird eine Kartusche, die zumindest ein Ionenaustauschermaterial enthält, eingesetzt und das Wasser durchläuft aufgrund seiner Schwerkraft die Kartusche, sammelt sich in der Kanne und kann sodann verwendet werden. So aufbereitetes, meist entcarbonisiertes Wasser wird beispielsweise zur Zubereitung von Heißgetränken, wie Tee, verwendet. Bei Tee kann durch die Verwendung von entcarbonisiertem Wasser die sonst typische Schlierenbildung damit weitgehend verhindert werden.

Neben einer Entcarbonisierung dienen derartige Vorrichtungen in vielen Fällen auch zur Entfernung von organischen Wasserinhaltsstoffe, wie zum Beispiel Pestizide und /oder Chlor aus dem Trinkwasser. Hierzu wird in der Regel Aktivkohle verwendet.

Nachteilig an derart schwerkraftbetriebenen Vorrichtungen ist, dass die Durchflussgeschwindigkeit ungleichmäßig ist. So verlangsamt sich naturgemäß gegen Ende des Filtervorgangs der Durchfluss dadurch, dass die über der Kartusche stehende Wassersäule kleiner ist. Weiter kommt es durch entstehende Gasblasen zu einer Behinderung des Durchflusses, wodurch die Durchflusszeit ebenfalls beeinflusst wird. Die variierende Durchflusszeit beeinflusst naturgemäß das Ergebnis des Filtervorgangs. Besonders problematisch ist die Verwendung von sogenannten Ultrafiltern. Dies sind Membranen, die derart fein sind, dass Bakterien das Filtermaterial nicht passieren können.

Die Verwendung derartiger Membranen resultiert bei schwerkraftbetriebenen Filtern vielfach in einer derart langen Durchlaufzeit, dass die Verwendung für den Benutzer äußerst unkomfortabel ist. Es besteht darüber hinaus die Gefahr, dass der Durchfluss sogar ganz zum Stehen kommt.

Aus der US 2013/0199974A1 ist eine Vorrichtung bekannt, bei der der Durchfluss durch eine Filterkartusche erhöht wird, indem mit Hilfe einer Luftpumpe im Rohwasserbehälter ein Überdruck erzeugt wird.

Weiter bekannt sind Kartuschen zur Aufbereitung und Entcarbonisierung von Wasser, welche in Automaten zur Zubereitung von Heißgetränken verwendet werden. Insbesondere werden derartige Kartuschen in Kaffeevollautomaten verwendet. Derartige Kartuschen werden in der Regel innerhalb des Tanks der Maschine auf einen Einsaugstutzen aufgesetzt.

Nachteilig ist dabei zum einen, dass jeder Hersteller ein anderes Kartuschensystem verwendet, so dass die im Handel verfügbaren Kartuschen nicht universal verwendet werden können.

Weiter nachteilig ist, dass das im Tank befindliche Wasser zwar gereinigt wird, wenn dieses zur Zubereitung eines Getränks durch einen Filter in die Maschine gesaugt wird. Im Tank selbst befindet sich aber nicht entcarbonisiertes bzw. enthärtetes Wasser. Dies hat zur Folge, dass es im Tank zu unschönen Bildungen von Kalkkrusten kommen kann. Dieser Effekt wird durch Verdunstung des Wassers verstärkt.

### Aufgabe der Erfindung

Der Erfindung liegt demgegenüber die Aufgabe zugrunde, eine Vorrichtung zur Wasseraufbereitung bereitzustellen, bei welcher die genannten Nachteile des Standes der Technik zumindest reduziert sind.

Es ist insbesondere eine Aufgabe der Erfindung, ein universal verwendbares System zur Wasseraufbereitung bereitzustellen, bei welchem im Falle der Verwendung als Alternative für einen schwerkraftbetriebenen Wasserhaushaltsfilter die Durchlaufzeiten verkürzt werden.

### Zusammenfassung der Erfindung

Die Erfindung wird bereits durch eine Vorrichtung zur Wasseraufbereitung gemäß Anspruch 1 gelöst. Unter Wasseraufbereitung wird insbesondere das Enthärten des Wassers unter Verwendung eines Ionenaustauschermaterials verstanden. Zur Wasseraufbereitung zählt aber auch das Filtern und/oder Entfernen von Keimen und schädlichen chemischen Stoffen aus dem Wasser, beispielsweise mittels Aktivkohle.
Bevorzugte Ausführungsformen und Weiterbildungen der Erfindung sind dem Gegenstand der Unteransprüche zu entnehmen.
Die Erfindung betrifft eine Vorrichtung zur Wasseraufbereitung, welche ein in Wasser eintauchbares Gehäuse umfasst. Gemäß der Erfindung kann das Gehäuse vollständig ins Wasser eingetaucht werden.

In das Gehäuse eingesetzt ist eine Kartusche mit einem Ionenaustauschermaterial.
Das Ionenaustauschermaterial kann als schwach saures Ionenaustauscherharz, als stark saures bzw. stark basisches Ionenaustauschermaterial und als Mischbettionenaustauscher ausgebildet sein.
Es versteht sich, dass im Sinne der Erfindung die Kartusche außer dem Ionenaustauschermaterial noch weitere Bestandteile zur Wasseraufbereitung enthalten kann, wie beispielsweise Stoffe zur Desinfektion des Wassers, und zur Adsorption organischer Verunreinigungen bzw. zur Entfernung von Chlor, insbesondere mittels Aktivkohle. Weiter ist denkbar, dass die Kartusche Substanzen zur Abgabe von Mineralstoffen und Spurenelementen an das Wasser enthält.
Neben der Verwendung einer derartigen Kartusche zur Aufbereitung von Trinkwasser ist auch denkbar, die Kartusche zu verwenden, um demineralisiertes Wasser zur Verwendung im Haushalt, beispielsweise zum Bügeln, bereitzustellen. In diesem Falle wird vorzugsweise ein Mischbettfilter verwendet, also eine Kartusche, welche sowohl ein kationisches als auch anionisches Ionenaustauschermaterial enthält und welche zur Vollentsalzung des Wasser dient.
Aufgrund der Austauschbarkeit ist insbesondere denkbar, ein System mit zumindest zwei Kartuschentypen bereitzustellen, bei welchem ein Kartuschentyp der Trinkwasseraufbereitung dient und ein anderer Kartuschentyp als Mischbettfilter ausgebildet ist und zur Vollentsalzung dient.

Weiter umfasst die Vorrichtung zur Wasseraufbereitung eine Pumpe sowie eine Energieversorgung für die Pumpe. Mittels der Pumpe ist Wasser durch die Kartusche mit dem Ionenaustauscher förderbar.

Im Unterschied zu bekannten schwerkraftbetriebenen Systemen sowie im Unterschied zu Kartuschen, die inline in einer Wasserleitung oder deren Ansaugstutzen eingesetzt werden, stellt die Erfindung mithin ein Modul bereit, mittels dessen das Wasser umwälzbar ist und während des Umwälzens durch die Kartusche gepumpt wird.

Hierdurch wird zum einen erreicht, dass sich die Durchlaufzeit gegenüber schwerkraftbetriebenen Kartuschen in der Regel verkürzt und der Durchlauf gleichmäßiger ist. Weiter wird eine universelle Verwendung dadurch ermöglicht, dass die Vorrichtung in Tanks, Kannen etc. mit unterschiedlicher Form eingetaucht werden kann.

Durch das Umwälzen des Wasser ermöglicht die Erfindung zudem eine kompaktere Ausgestaltung einer Kanne zur Aufbereitung von Trinkwasser, da nicht zwingendermaßen ein Trichter bereitgestellt werden muss, welcher in etwa das gleiche Volumen wie der Sammelraum einer derartigen Kanne haben muss.

Der Umwälzvorgang erfolgt vorzugsweise volumen- oder zeitgesteuert, d.h. nach einer Aktivierung fördert die Pumpe für eine vorgegebene Zeitspanne/ein vorgegebenes Wasservolumen und schaltet sich sodann selbständig ab.

Denkbar ist, die Zeitspanne variabel zu gestalten.

Zum einen ist denkbar, dass der Benutzer in Abhängigkeit vom Härtegrad des Wassers und vom gewünschten Grad der Enthärtung die Zeitspanne variieren kann. Hierfür kann z.B. eine geeignete Elektronik vorgesehen sein.

Zusätzlich oder in Kombination ist denkbar, die Zeitspanne abhängig von der Restlebensdauer der Kartusche zu verlängern. Aufgrund der fortschreitenden Entladung des Ionenaustauschermaterials nimmt die Wirksamkeit der Kartusche mit zunehmender Lebensdauer ab, d.h. der Grad der Enthärtung sinkt. Dies kann zumindest teilweise durch eine Verlängerung der Zeitspanne, in welcher die Pumpe läuft, in Abhängigkeit von der Restlebensdauer der Kartusche kompensiert werden.

Weiter ist auch denkbar, die Vorrichtung mit Elektroden zur Messung der Leitfähigkeit des Wassers zu versehen.

Die Leitfähigkeit kann auch im Falle der Aufbereitung von Trinkwasser als ein Indikator für den Grad der Entcarbonisierung oder Demineralisierung verwendet werden.

Im Falle der Vollentsalzung von Trinkwasser reicht eine Messung der Leitfähigkeit in jedem Falle aus, um auf eine hinreichende Demineralisierung des Wassers schließen zu können. In diesem Falle kann die Leitfähigkeit als alleiniges Steuerungsmittel für die erfindungsgemäße Vorrichtung zur Wasseraufbereitung verwendet werden.

Weiter ist ebenfalls denkbar, die Elektroden zur Leitfähigkeitsmessung als Schalter zu verwenden, um die Pumpe zu aktivieren.

In dem Falle, in welchem beispielsweise die Vorrichtung in den Trichter einer Kanne eingesetzt wird, genügen bereits die Elektroden als alleiniger Schalter für eine Pumpe. Diese schaltet sich in dem Fall, in dem das Wasser den Trichter passiert hat, dadurch automatisch ab, dass nunmehr die Vorrichtung zur Wasseraufbereitung nicht mehr mit Wasser beaufschlagt ist.

Es versteht sich, dass im Sinne der Erfindung insbesondere vorgesehen ist, Elektroden zur Leitfähigkeitsmessung auch mit anderen Schaltmitteln zu kombinieren.

Denkbar ist, auf einen vom Benutzer aktivierbaren Schalter völlig zu verzichten, so dass die Vorrichtung durch bloßes Eintauchen in Wasser angeschaltet wird und sich automatisch abschaltet, nachdem eine vorgegebene Zeitspanne abgelaufen ist und/oder die Leitfähigkeit des Wassers sich auf oder um einen vorgegebenen Wert reduziert hat.

Vorzugsweise ist die Pumpe berührungslos betätigbar.

Dies gilt auch in dem Fall, dass die Pumpe durch den Benutzer aktivierbar ist.

So wird vermieden, dass der Benutzer zur Aktivierung der Pumpe die Finger ins Wasser tauchen muss.

Eine berührungslose Betätigung ist beispielsweise mittels eines Magneten möglich. Dieser kann insbesondere mit einem Reed-Schalter zusammenwirken, welcher im Gehäuse der erfindungsgemäßen Vorrichtung eingebaut ist.
Weiter ist denkbar, die Pumpe über eine drahtlose Übertragung eines Funksignals zu aktivieren. Hierdurch lassen sich auch längere Strecken überbrücken, etwa wenn die Kartusche nicht bestimmungsgemäß direkt an einer Wand angebracht ist. Dabei kann insbesondere auf bestehende Standards, wie etwa Bluetooth, zurückgegriffen werden.
Die Energieversorgung der erfindungsgemäßen Vorrichtung umfasst einen im Gehäuse der Vorrichtung integrierten Energiespeicher, insbesondere einen Akku. Die Vorrichtung ist mithin autark und muss nicht zusammen mit einem Kabel in das Wasser eingetaucht werden.
Der im Gehäuse angeordnete Akku ist vorzugsweise induktiv aufladbar und befindet sich in einem hermetisch verschlossenen Abschnitt des Gehäuses.
So kann auf einfache Weise ein dichtes Gehäuse bereitgestellt werden, beispielsweise indem ein hermetisch verschlossener Gehäuseabschnitt aus verklebten oder verschweißten Gehäuseteilen hergestellt wird oder indem Komponenten, welche nicht mit Wasser in Berührung kommen dürfen, mit Kunststoff umspritzt sind.

Gemäß der Erfindung umfasst das Gehäuse mithin einen hermetisch abgeschlossenen Gehäuseabschnitt.

Weiter umfasst die Pumpe Fördermittel, die über in dem hermetisch abgeschlossenen Abschnitt des Gehäuses angeordnete Antriebsmittel betätigbar sind.
Bei einer bevorzugten Ausführungsform der Erfindung befindet sich in einem nicht hermetisch verschlossenen Gehäuseabschnitt ein Laufrad, mit dem Wasser durch die eingesetzte Kartusche pumpbar ist.

Das Laufrad wird über einen im hermetisch verschlossenen Abschnitt des Gehäuses angeordneten Elektromotor bewegt. Vorzugsweise ist hierfür nicht eine Welle mit einer Dichtung vorgesehen, sondern das Laufrad ist magnetisch an den Motor angekoppelt, etwa mittels eines Rades, welches dem Laufrad der Pumpe gegenüber liegt.
So kann auf einfache Weise ein hermetisch verschlossener Gehäuseabschnitt mit hoher Dichtigkeit auch über einen längeren Zeitraum bereitgestellt werden.
Denkbar sind aber auch andere Pumpprinzipien, etwa eine Membranpumpe, deren Membran magnetisch durch eine Wand des hermetisch verschlossenen Abschnitts hindurch betätigbar ist.
Bei einer bevorzugten Ausführungsform der Erfindung umfasst die Vorrichtung eine Anzeigeeinrichtung, welche ein notwendiges Wechseln der Kartusche mit dem Ionenaustauschermaterial signalisiert.

Es kann sich dabei insbesondere um eine optische Anzeigeeinrichtung handeln, beispielsweise um LEDs, welche durch das Gehäuse der Kartusche hindurch scheinen. Vorzugsweise sind die LEDs vergossen oder im hermetisch verschlossenen Abschnitt des Gehäuses angeordnet.

Neben einem optischen Signalisieren, dass die Kartusche ihre Maximallebensdauer erreicht hat, ist es auch denkbar, die Vorrichtung derart auszugestalten, dass die Pumpe nicht mehr aktivierbar ist, wenn die Kartusche ihre maximale Lebenszeit erreicht hat.

Es ist dann denkbar, dass der Benutzer eine neue Kartusche einsetzt und die Vorrichtung zur Wasseraufbereitung durch den Benutzer zurückgesetzt wird, beispielsweise durch Betätigen eines Rücksetzschalters.

Denkbar ist aber auch eine automatische Erkennung des Einsetzens einer neuen Kartusche.

Die maximale Lebensdauer der Kartusche kann über ein Elektronikmodul berechnet werden.

Die Berechnung der Lebensdauer der Kartusche kann auf Basis eines oder mehrerer nachstehend genannter Parameter erfolgen:
Gesamtzeit, über welche die Pumpe aktiviert ist, Zeit seit erstmaligem Verwenden der Kartusche, Leitfähigkeitsänderung des behandelnden Wassers, und zwar entweder über eine vorgegebene Zeitspanne bestimmt oder bezogen auf einen vorgegebenen Schwellwert, Härtegrad des Wassers, und zwar entweder auf Basis eines vom Benutzer eingegebenen Wertes oder geschätzt auf Basis der Leitfähigkeit des Wassers.

Im einfachsten Fall wird die Zeitspanne, über die die Pumpe insgesamt aktiviert ist, herangezogen, da diese in hohem Maße mit der durch die Kartusche geleiteten Wassermenge korreliert.

Bei der Verwendung zur Vollentsalzung kann als alleiniges Maß die Leitfähigkeit des entsalzten Wassers genügen. Sofern ein vorgegebener Wert nicht mehr erreicht werden kann, hat die Kartusche ihre maximale Lebensdauer erreicht. Es versteht sich aber, dass auch in diesem Falle eine maximale Einschaltzeit der Pumpe vorgegeben sein sollte, damit diese gegen Ende der Lebensdauer nicht über einen sehr langen Zeitraum in einem Stück aktiviert ist.

Die Kartusche ist vorzugsweise in eine Ausnehmung, insbesondere in eine Aussparung des Gehäuses einsetzbar.

Bei einer Weiterbildung der Erfindung wird das Gehäuse an einer Wand befestigt, wobei dieses mittels magnetischer Kraft gegenüber einem auf einer anderen Seite der Wand angeordneten Halter angebracht wird.

Es ist also im Gehäuse oder im Halter zumindest ein Magnet vorgesehen, mittels dessen das Gehäuse durch die Wand hindurch gehalten wird.

So kann das Gehäuse auf sehr einfache Weise in einem Wassertank oder in einer Kanne an einer definierten Position gehalten werden, ohne dass an Wand oder Kanne weitere Befestigungsmittel angebracht sein müssen.

Bei einer bevorzugten Ausführungsform der Erfindung weist der Halter einen Stromnetzanschluss sowie Mittel zum induktiven Aufladen eines im Gehäuse angeordneten Akkus auf.

Der Halter weist also insbesondere eine Spule auf, über die mittels Induktion und eine im Gehäuse angeordnete weitere Spule die Akkus der Vorrichtung zur Wasseraufbereitung geladen werden können.

Die Akkus können mithin in dem hermetisch verschlossenen Abschnitt des Gehäuses angeordnet sein, ohne dass dieses eine Klappe haben muss, über die die Akkus entnommen werden können.

Das Gehäuse kann vielmehr verschweißt, verklebt oder vergossen sein, so dass dieses nicht geöffnet werden kann, ohne es zu zerstören.

Alternativ kann die Vorrichtung auch andere Mittel zur Befestigung an der Wand einer Kanne oder eines Tanks aufweisen. Beispielsweise ist denkbar das Gehäuse mittels eines Saugnapfes an der Wand zu befestigen oder mittels eines Hakens, der an einem oberen Rand der Kanne oder des Tanks eingehakt werden kann. Ein solcher Haken hat den Vorteil, dass das Gehäuse an dem Haken herausgezogen werden kann, ohne das Wasser zu berühren.

Die Vorrichtung kann des Weiteren einen Ultrafilter umfassen, welcher in Strömungsrichtung des Wassers nach der Kartusche mit dem Ionenaustauschermaterial angeordnet ist.

Neben einer Enthärtung des Wassers können so Krankheitskeime entfernt werden und die Vorrichtung kann insbesondere auch verwendet werden, um aus Wasser, welches aufgrund der Keimbelastung nicht zum Trinken geeignet ist, Trinkwasser zu erzeugen.

Neben der Verwendung der erfindungsgemäßen Vorrichtung in einem Tank oder einer Kanne, wobei das Gehäuse in den Wasserbehälter eingetaucht wird, ist auch denkbar, die erfindungsgemäße Vorrichtung in den Trichter eines Wasserhaushaltsfilters einzusetzen, beispielsweise diese in den Trichter zu klemmen, wobei das Wasser durch die Vorrichtung zur Wasseraufbereitung aktiv durch den Trichter befördert wird.

Die Funktionalität entspricht somit im wesentlichen einer schwerkraftbetriebenen Vorrichtung zur Wasseraufbereitung, wobei das Wasser in diesem Fall aber nicht aufgrund der Schwerkraft durch das Ionenaustauschermaterial geleitet wird, sondern aktiv mittels der Pumpe gefördert wird, wodurch sich gleichmäßige und kurze Durchlaufzeiten erreichen lassen.

Insbesondere für eine derartige Verwendung kann die Vorrichtung zur Wasseraufbereitung ein Sperrventil umfassen, so dass Wasser nur durchfließt, wenn die Pumpe fördert.

Im folgenden wird eine Kartusche beschrieben, welche in der vorstehend beschriebenen Vorrichtung verwendet werden kann.

Die Kartusche ist mit einem Ionenaustauschermaterial, insbesondere mit einem Ionenaustauscherharz, gefüllt und umfasst ein Gehäuseunterteil und ein Gehäuseoberteil.
In einer Draufsicht nimmt das Gehäuseunterteil eine größere Fläche ein als ein angrenzendes Gehäuseoberteil.
In dem Gehäuseunterteil ist zumindest ein Ein- und/oder Auslauf angeordnet.
Vorzugsweise bildet das Gehäuseunterteil der Kartusche in einer Haupterstreckungsrichtung zwei Fortsätze, wobei auf der Oberseite des Unterteils angrenzend zum Oberteil jeweils ein Ein- oder Auslauf angeordnet ist.
Aufgrund des mittigen Fortsatzes, welcher vorzugsweise eine Höhe von mindestens 5 mm hat, wird ein größeres Volumen für das Ionenaustauschermaterial bereitgestellt.
Die Fortsätze des Unterteils ermöglichen die Positionierung des Ein- und Auslaufs im eingesetzten Zustand innerhalb des Gehäuses der Vorrichtung zur Wasseraufbereitung.
Oberteil und Unterteil sind vorzugsweise im Wesentlichen quaderförmig ausgebildet.

Weiter ist die Kartusche vorzugsweise derart symmetrisch ausgebildet, dass Ein- und Auslauf austauschbar sind. Die Strömungsrichtung ist bei Ionenaustauscherkartuschen egal und es ist durch den symmetrischen Aufbau ein einfacheres Wechseln möglich.

### Beschreibung der Zeichnungen

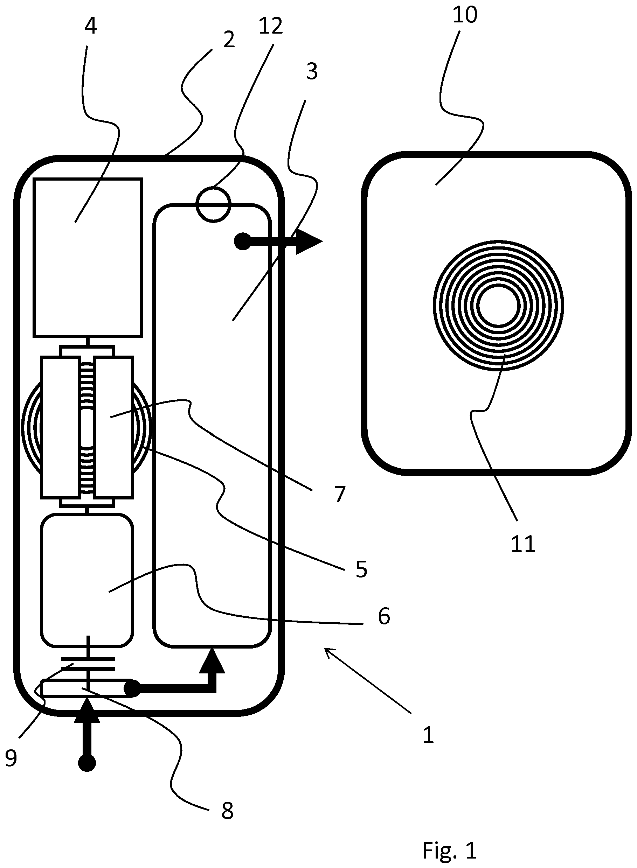

Die Erfindung soll im Folgenden bezugnehmend auf die Zeichnungen Fig. 1 bis Fig. 8 näher erläutert werden:
Fig. 1 zeigt anhand einer schematischen Darstellung das Grundprinzip der Erfindung.

Zu erkennen ist eine Vorrichtung zur Wasseraufbereitung 1. Diese umfasst ein Gehäuse 2, welche in diesem Ausführungsbeispiel im Wesentlichen einen rechteckigen Querschnitt hat.

In das Gehäuse eingesetzt ist eine Kartusche 3 mit einem Ionenaustauschermaterial.

Weiter ist in dem Gehäuse ein Elektronikmodul 4 angeordnet, welches über Akkus 7 mit Strom versorgt wird.

Über das Elektronikmodul 4 kann ein Elektromotor 6 betätigt werden, welcher die Pumpe 8 antreibt.

Die Pumpe 8 ist über magnetische Mittel 9 mit dem Elektromotor 6 gekoppelt, damit der Elektromotor 6 in einem hermetisch verschlossenen Gehäuseabschnitt eingebaut sein kann, ohne dass eine Durchführung mit einer Dichtung für die Motorwelle erforderlich ist.

Über die Pumpe wird Wasser eingesaugt und durch die Kartusche 3 geleitet.

Die Richtung des Wassers ist mittels der Pfeile symbolisiert.

In einer Ausführungsvariante wird das Gehäuse 2 in das Wasser eingetaucht, nachdem der Benutzer über einen Schalter (nicht dargestellt) die Pumpe 8 aktiviert hat.

Die Pumpe 8 fördert sodann gesteuert durch das Elektronikmodul 4 für ein vorgegebenes Zeitintervall und wälzt das Wasser zur Aufbereitung um.

Um das Gehäuse 2 auf einfache Weise an der Wand einer Kanne oder eines Tanks anbringen zu können, umfasst dieses zumindest einen Magneten 12.

Zu erkennen ist weiter ein Halter 10, welcher einen Magneten oder ein ferromagnetisches Material umfasst und welcher auf der Außenseite der Kanne oder des Tanks angebracht werden kann.

Der Halter 10 umfasst des Weiteren eine Spule 11 sowie einen Stromanschluss (nicht dargestellt).

Über die Spule 11 und die im Gehäuse 2 integrierte Spule 5 können die Akkus 7 induktiv aufgeladen werden.

Von Vorteil ist dabei, dass der Halter 10 nicht mit Wasser in Berührung kommt, während das Gehäuse 2 derart ausgebildet ist, dass es vollständig ins Wasser eingetaucht werden kann.

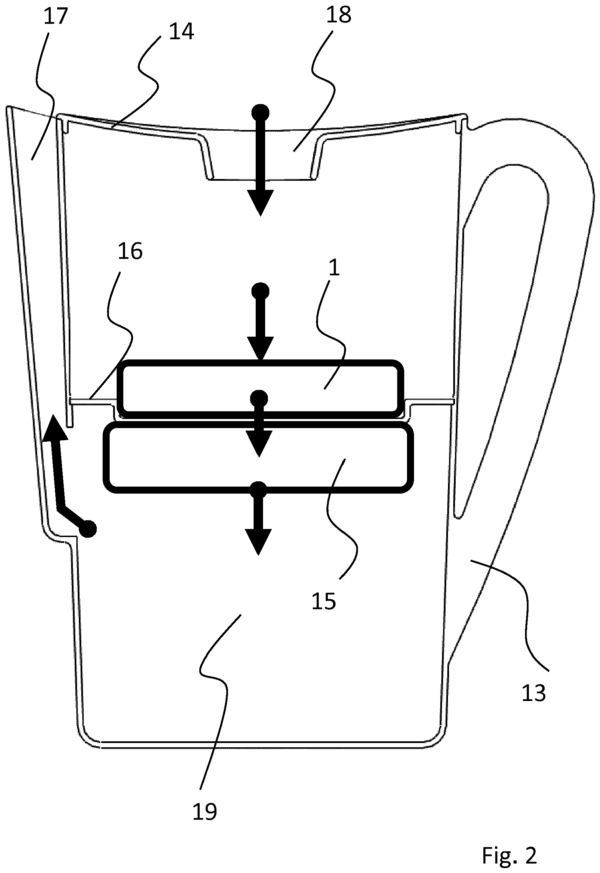

Fig. 2 zeigt schematisch eine erste Anwendung der Erfindung, bei welcher die in Fig. 1 dargestellte Vorrichtung zur Wasseraufbereitung 1 für eine Kanne 13 zum Aufbewahren von Trinkwasser verwendet wird.

Die Kanne 13 umfasst einen Griff sowie einen Sammelraum 19, in welchem sich das aufbereitete Wasser sammelt.

Diese Ausführungsvariante ähnelt einer schwerkraftbetriebenen Vorrichtung zur Wasseraufbereitung und umfasst einen Trichter 14.

Über eine Einfüllöffnung 18 kann Wasser in den Trichter 14 geschüttet werden.

In den Trichterboden 16 eingesetzt ist die in Fig. 1 dargestellte Vorrichtung zur Wasseraufbereitung.

Im Unterschied zu einer schwerkraftbetriebenen Vorrichtung zur Wasseraufbereitung pumpt die in der Vorrichtung 1 vorhandene Pumpe das Wasser aktiv in den Sammelraum 19.

Hierdurch wird ein gleichmäßiger und schneller Durchfluss ermöglicht.

Unterhalb des Trichters 14 ist ein Ultrafilter 15 angebracht.

Dieser ist vorzugsweise modular ausgebildet und von der restlichen Vorrichtung zur Wasseraufbereitung trennbar.

Aufgrund des aktiven Förderns des Wassers kann dieses auch in akzeptabler Verweilzeit den Ultrafilter 15 passieren.

Der Auslauf 17 ist direkt aus dem Sammelraum 19 abgezweigt, so dass das Wasser entnommen werden kann, ohne den Trichter 14 zu entfernen.

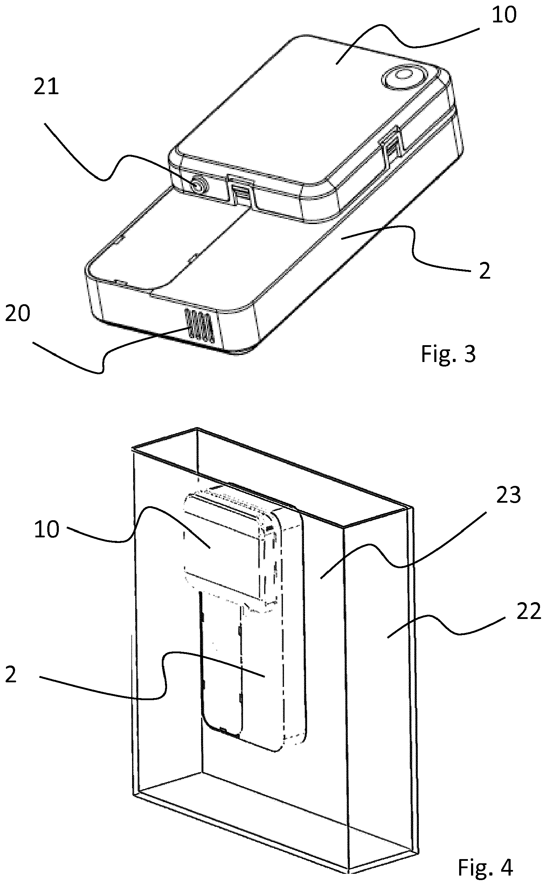

Fig. 3 zeigt eine erste Ausführungsvariante der Erfindung in einer schematischen Ansicht.

Zu erkennen ist das Gehäuse 2 der Vorrichtung zur Wasseraufbereitung, welches an der Seite einen Einlauf 20 aufweist.

Das Gehäuse 2 ist im Wesentlichen quaderförmig ausgebildet und wird mittels des Halters 10, welcher Mittel zum induktiven Aufladen aufweist, mittels Magnetkraft befestigt.

Zu erkennen ist die Kabeldurchführung 21 des Halters 10, mittels der dieser an einer Stromquelle angeschlossen wird. Insbesondere ist ein Schwachstromanschluss (nicht dargestellt) vorgesehen, ein durch die Kabeldurchführung 21 hindurch geführtes Kabel ist mithin vorzugsweise mit einem Spannungswandler verbunden, welcher mit dem Stromnetz verbunden wird (nicht dargestellt).

Fig. 4 zeigt in einer perspektivischen Ansicht den Tank 22 einer Maschine zur Bereitung von Heißwassergetränken.

Zu erkennen ist, dass das Gehäuse 2 der in Fig. 3 dargestellten Vorrichtung zur Wasseraufbereitung auf einfache Weise mittels des an der Außenseite angebrachten Halters 10 an der Wand 23 des Tanks befestigt werden kann.

Im Unterschied zu bekannten Kartuschen zur Wasseraufbereitung, welcher typischerweise auf den Ansaugstutzen der Maschine aufgesetzt werden, wird hier das Wasser bereits im Tank aufbereitet, so dass die Bildung von Kalkrändern in dem typischerweise aus transparentem Material ausgebildeten Tank 22 weitgehend vermieden wird.

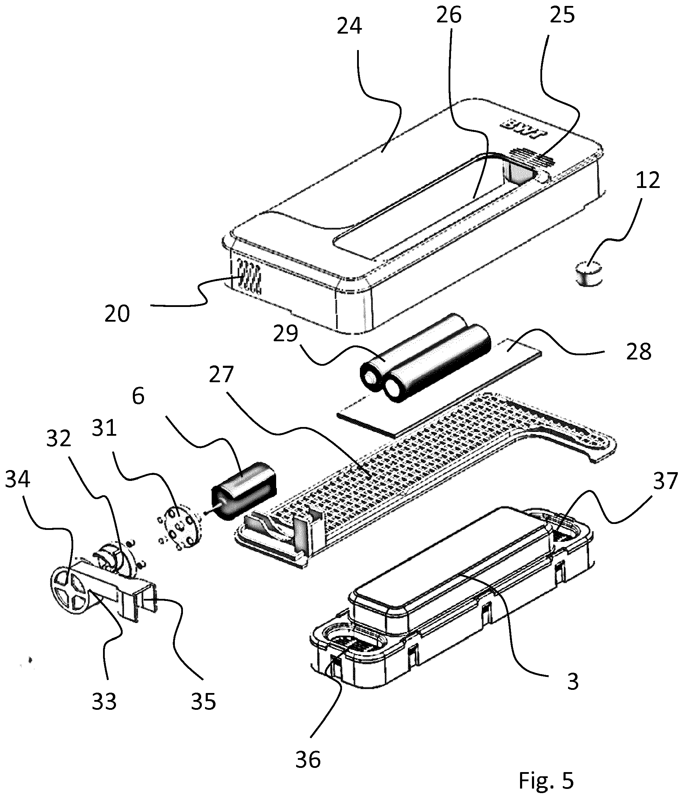

Fig. 5 zeigt in einer Explosionsdarstellung die wesentlichen Komponenten eines Ausführungsbeispiels einer Vorrichtung zur Wasseraufbereitung.

Zu erkennen ist ein Gehäuseoberteil 24 mit einem seitlich angeordneten Einlauf 20 und einem Auslauf 25, welcher auf der Oberseite des Gehäuseoberteils 24 angeordnet ist. Das Gehäuseoberteil 24 weist eine Aussparung 26 auf, in welche in zusammengebautem Zustand das Gehäuseoberteil der Kartusche 3 ragt.

Das Gehäuseoberteil 24 wird mit einem Gehäuseunterteil 27 verbunden.

Zwischen Gehäuseoberteil 24 und Gehäuseunterteil 27 wird ein hermetisch verschlossener Gehäuseabschnitt gebildet.

In diesem Gehäuseabschnitt sitzt eine Platine 28.

Auf der Platine 28 sitzen die Akkus 29.

Die Platine 28 bildet ein Elektronikmodul, welches den Elektromotor 6 ansteuert.

Dieser ist ebenfalls im hermetisch verschlossenen Bereich des Gehäuses angeordnet.

Über den Elektromotor 6 wird ein Rad 31 bewegt, welches zumindest einen Magneten aufweist.

Auch das Rad 31 sitzt im hermetisch verschlossenen Gehäuseabschnitt.

Das Wasser wird mittels eines Laufrades 32, welches in diesem Ausführungsbeispiel als Turbinenrad ausgebildet ist, gefördert. Das Laufrad weist ebenfalls zumindest einen Magneten auf oder ist zumindest abschnittsweise ferromagnetisch ausgebildet. In diesem Ausführungsbeispiel weisen sowohl Laufrad 32 als auch das Rad 31 mehrere über den Umfang verteilte Magnete auf. Aufgrund der magnetischen Kräfte dreht sich auch das Laufrad 31, wenn das Rad 31 vom Elektromotor angetrieben wird.

Zum Pumpen von Wasser sitzt das Laufrad 32 in einem Laufradgehäuse 33, welches einen Einlass 34 und einen Auslauf 25 aufweist. Über den Einlass 34 wird durch den Einlauf 20 des Gehäuseoberteils Wasser angesaugt und seitlich durch den Auslass in den Einlauf 36 der Kartusche 3 gefördert.

Dieses Wasser passiert sodann die Kartusche 3, wird aufbereitet und tritt über den Auslauf 37 aus der Kartusche aus, worauf es über den Auslauf 25 des Gehäuses austreten kann.

Weiter zu erkennen ist ein Magnet 12, welcher der Befestigung des Gehäuses mittels eines korrespondierenden Halters dient.

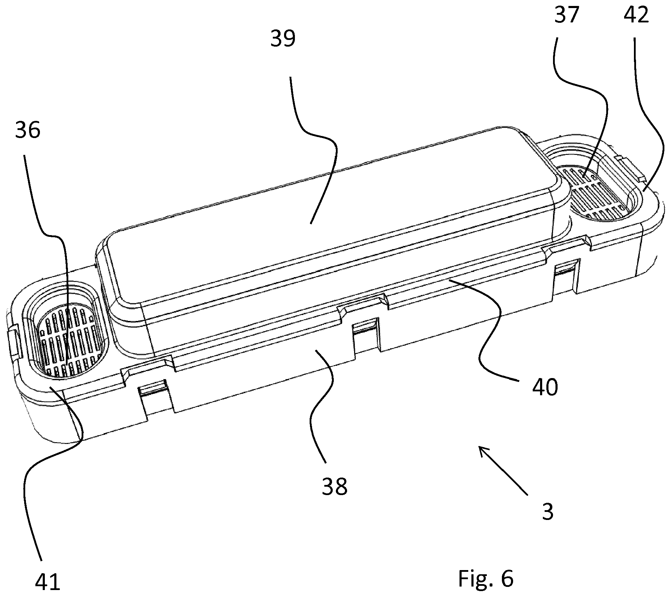

Fig. 6 zeigt in einer perspektivischen Darstellung die Kartusche 3, in welcher das Ionenaustauschermaterial (nicht dargestellt) angeordnet ist.

Die Kartusche 3 umfasst ein Gehäuseunterteil 38 sowie ein Gehäuseoberteil 39, wobei in diesem Fall nicht separate Bauteile verstanden werden, sondern die geometrische Ausgestaltung der Kartusche 3.

Sowohl Gehäuseoberteil 39 als auch Gehäuseunterteil 38 sind im Wesentlichen quaderförmig ausgebildet.

Das Gehäuseunterteil 38 ist in diesem Ausführungsbeispiel in der Draufsicht gesehen größer als das Gehäuseoberteil 39 und weist, in Haupterstreckungsrichtung gesehen, zwei Fortsätze 41, 42 auf.

Die Fortsätze ragen mindestens 1 cm über das Gehäuseoberteil 39.

In den Fortsätzen befindet sich der Einlauf 36 sowie der Auslauf 37 der Kartusche, wobei die Kartusche 3 in diesem Ausführungsbeispiel derart symmetrisch ausgebildet ist, dass diese auch um 180° verdreht eingesetzt werden kann, wodurch Einlauf und Auslauf vertauscht sind. Die Strömungsrichtung ist bei einer Kartusche mit einem Ionenaustauscherharz aber egal.

Einlauf 36 und Auslauf 37 haben einen offenen Querschnitt von vorzugsweise mindestens 0,5 cm².

Einlauf 36 und Auslauf 37 sind auf der Oberseite des Gehäuseunterteils 38 angeordnet und zeigen mithin in Richtung des Gehäuseoberteils 39.

Ein- und Auslauf 36, 37 bilden eine Vertiefung und sind mit einem Gitter versehen, welches dem Rückhalten des Ionenaustauscherharzes dient.

Die hier dargestellte Kartuschenbauform hat den Vorteil, dass das Gehäuseoberteil 39 weiteres Volumen bereitstellt, in dem Ionenaustauschermaterial vorhanden sein kann.

Dadurch, dass Ein- und Auslauf innerhalb der Fortsätze angeordnet sind, wird ermöglicht, dass diese im Wesentlichen mittig im Gehäuse (2 in Fig. 2) angeordnet sein können, so dass in diesem Bereich Zu- und Ablauf in kompakter Bauform angeordnet sein können.

Das Gehäuseunterteil 38 ist in dieser Ausführungsform auch an der Längsseite des Gehäuseoberteils 39 größer ausgebildet, so dass auch längsseitig das Gehäuseunterteil 38 einen Steg 40 bildet.

Dieser kann beispielsweise als Anschlag beim Einsetzen der Kartusche dienen und stabilisiert zudem das Gehäuse.

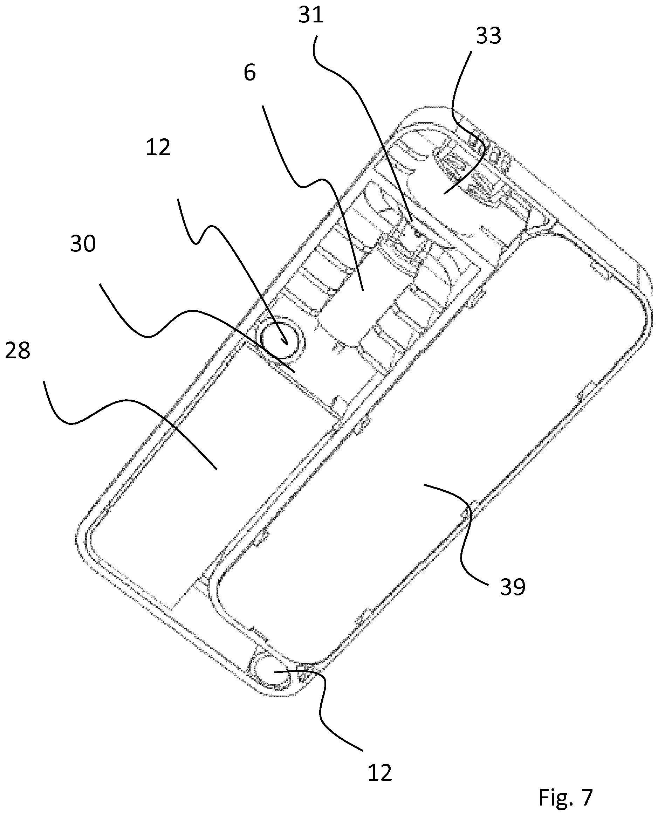

Fig. 7 zeigt eine perspektivische Ansicht der in Fig. 5 dargestellten Vorrichtung zur Wasseraufbereitung, wobei in dieser Ansicht die Komponenten zusammengebaut sind, das Gehäuseunterteil allerdings ausgeblendet ist.

Zu erkennen ist die Oberseite des Gehäuseoberteils 39, welche durch die Aussparung des Gehäuses zu sehen ist.

Weiter zu erkennen sind in diesem Ausführungsbeispiel zwei Magnete 12, welche der Befestigung des Gehäuses in einem Tank oder einer Kanne dienen.

In einem hermetisch verschlossenen Gehäuseabschnitt 30, welcher durch das Anbringen des Gehäuseunterteils gebildet wird, sind u.a. die Platine und der Elektromotor 6 sowie das Rad 31 angeordnet.

Das Laufradgehäuse 33 befindet sich dagegen in einem nicht hermetisch verschlossenen Abschnitt.

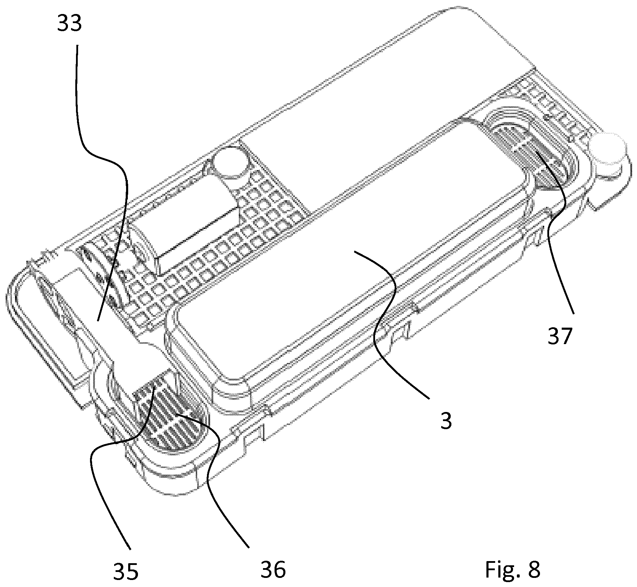

Fig. 8 zeigt eine weitere perspektivische Ansicht, bei welcher nunmehr das Gehäuseoberteil ausgeblendet ist.

Zu sehen ist insbesondere das Laufradgehäuse 33, dessen Auslass 35 über dem Einlass 36 der Kartusche 3 angeordnet ist.

So kann auf einfache Weise das Wasser zum Einlauf 36 der Kartusche 3 gefördert werden. Es sind keine aufwendigen Dichtungen notwendig, randseitig zum Einlauf 36 vorhandene Leckagen führen lediglich zu einer etwas verschlechterten Effizienz der Pumpe.

Über den Auslauf 37 tritt das Wasser aus der Kartusche aus.

Denkbar ist die Bereitstellung von verschiedenen Kartuschentypen zur Enthärtung von Trinkwasser sowie zum Vollentsalzen von Wasser für Haushaltszwecke.

Durch die Erfindung konnte ein universal verwendbares Modul zur Wasseraufbereitung bereitgestellt werden, welches für verschiedenartige Anwendungszwecke geeignet ist.

### Bezugszeichenliste

- 1: Vorrichtung zur Wasseraufbereitung
- 2: Gehäuse
- 3: Kartusche
- 4: Elektronikmodul
- 5: Spule
- 6: Elektromotor
- 7: Akku
- 8: Pumpe
- 9: magnetische Kopplungsmittel
- 10: Halter
- 11: Spule
- 12: Magnet
- 13: Kanne
- 14: Trichter
- 15: Ultrafilter
- 16: Trichterboden
- 17: Auslauf
- 18: Einfüllöffnung
- 19: Sammelraum
- 20: Einlauf
- 21: Kabeldurchführung
- 22: Tank
- 23: Wand
- 24: Gehäuseoberteil
- 25: Auslauf
- 26: Aussparung
- 27: Gehäuseunterteil
- 28: Platine
- 29: Akku
- 30: hermetisch verschlossener Gehäuseabschnitt
- 31: Rad
- 32: Laufrad
- 33: Laufradgehäuse
- 34: Einlass
- 35: Auslass
- 36: Einlauf
- 37: Auslauf
- 38: Gehäuseunterteil
- 39: Gehäuseoberteil
- 40: Rand
- 41: Fortsatz
- 42: Fortsatz

## Patentansprüche

1. Vorrichtung zur Wasseraufbereitung (1), umfassend ein Gehäuse (2), welches ausgebildet ist, vollständig in Wasser eingetaucht werden zu können,
eine in das Gehäuse (2) eingesetzte austauschbare Kartusche (3) mit einem Ionenaustauschermaterial sowie eine Pumpe (8) und eine Energieversorgung für die Pumpe (8), welche einen im Gehäuse (2) angeordneten Energiespeicher umfasst, wobei mittels der Pumpe (8) Wasser durch die Kartusche (3) mit dem Ionenaustauschermaterial förderbar ist, wobei die Pumpe (8) Fördermittel aufweist, die über in einem hermetisch verschlossen Abschnitt des Gehäuses angeordnete Antriebsmittel betätigbar sind.

2. Vorrichtung zur Wasseraufbereitung nach dem vorstehenden Anspruch, **dadurch gekennzeichnet, dass** die Vorrichtung einen im Gehäuse (2) angeordneten Akku (7) aufweist, welcher induktiv aufladbar ist.

3. Vorrichtung zur Wasseraufbereitung nach einem der vorstehenden Ansprüche, **dadurch gekennzeichnet, dass** Vorrichtung ausgebildet ist, in den Tank (22) einer Maschine zur Zubereitung von Heißgetränken und/oder in eine Kanne (13) zur Aufbewahrung von Wasser im Haushalt eingetaucht zu werden.

4. Vorrichtung zur Wasseraufbereitung nach einem der vorstehenden Ansprüche, **dadurch gekennzeichnet, dass** die Pumpe (8) ein Laufrad (32) aufweist, welches über einen in einem hermetisch verschlossenen Abschnitt des Gehäuses angeordneten Elektromotor (6) bewegbar ist.

5. Vorrichtung zur Wasseraufbereitung nach einem der vorstehenden Ansprüche, **dadurch gekennzeichnet, dass** die Vorrichtung nach Aktivierung für eine vorgegebene Zeitpanne Wasser durch die Kartusche (3) mit dem Ionenaustauschermaterial fördert und/oder dass die Vorrichtung eine Anzeigeeinrichtung aufweist, welche ein notwendiges Wechseln der Kartusche (3) mit dem Ionenaustauschermaterial signalisiert und/oder dass die Vorrichtung Elektroden zur Messung der Leitfähigkeit des Wasser aufweist.

6. Vorrichtung zur Wasseraufbereitung nach einem der vorstehenden Ansprüche, **dadurch gekennzeichnet, dass** das Gehäuse eine Aussparung (26) aufweist, in welche die Kartusche (3) einsetzbar ist, wobei die Kartusche ein Gehäuseunterteil (38) aufweist, welches in einer Draufsicht eine größere Fläche einnimmt als ein angrenzendes Gehäuseoberteil (39), wobei in dem Gehäuseunterteil (38) zumindest ein Ein- und/oder Auslauf (36,37) angeordnet ist.

7. Vorrichtung zur Wasseraufbereitung nach einem der vorstehenden Ansprüche, **dadurch gekennzeichnet, dass** das Gehäuse (2) an einer Wand (23) mittels magnetischer Kraft gegenüber einem auf einer anderen Seite der Wand angeordneten Halter (10) befestigbar ist.

8. Vorrichtung zur Wasseraufbereitung nach dem vorstehenden Anspruch, **dadurch gekennzeichnet, dass** der Halter (10) einen Stromnetzanschluss sowie Mittel zum induktiven Aufladen eines im Gehäuse (2) angeordneten Akkus (7) aufweist.

9. Vorrichtung zur Wasseraufbereitung nach einem der vorstehenden Ansprüche, **dadurch gekennzeichnet, dass** die Vorrichtung einen Ultrafilter (15) aufweist, welcher, in Strömungsrichtung des Wassers gesehen, nach der Kartusche (3) mit dem Ionenaustauschermaterial angeordnet ist.

10. Tank (22) einer Maschine zur Zubereitung von Heißgetränken, umfassend eine Vorrichtung zur Wasseraufbereitung nach einem der vorstehenden Ansprüche.

11. Kanne (13) zur Aufbewahrung von Wasser, umfassend eine Vorrichtung zur Wasseraufbereitung nach einem der vorstehenden Ansprüche.

12. Kanne (13) nach dem vorstehenden Anspruch, **dadurch gekennzeichnet, dass** die Kanne einen Trichter umfasst, in welchen die Vorrichtung zur Wasseraufbereitung eingesetzt ist.

13. Verwendung einer Vorrichtung nach Anspruch 1 in einem Wasserhaushaltsfilter, wobei die Vorrichtung in einen Trichter des Wasserhaushaltsfilters eingesetzt wird, und das Wasser durch die Vorrichtung aktiv durch den Trichter befördert wird.

14. Verwendung einer Vorrichtung nach Anspruch 1 in einem Tank einer Maschine zur Zubereitung von Heißgetränken, wobei die Vorrichtung in den Tank eingetaucht wird und wobei das Gehäuse an einer Wand befestigt wird, indem es mittels magnetischer Kraft gegenüber einen auf der anderen Seite der Wand angeordneten Halter angebracht wird.

## Claims

1. Device for water treatment (1), comprising a housing (2) which is configured to be able to be completely submerged in water,
a replaceable cartridge (3) which is inserted into the housing (2) and has an ion exchange material,
and a pump (8) and an energy supply for the pump (8), which includes an energy store arranged in the housing (2), wherein water can be conveyed through the cartridge (3) with the ion exchange material by means of the pump (8), wherein the pump (8) comprises conveying means which can be operated via drive means arranged in an hermetically sealed section of the housing.

2. Device for water treatment as claimed in the preceding claim, **characterised in that** the device comprises a battery (7) arranged in the housing (2), said battery being able to be charged inductively.

3. Device for water treatment as claimed in any one of the preceding claims, **characterised in that** the device is configured to be submerged in the tank (22) of a machine for preparing hot drinks and/or in a pot (13) for storing water domestically.

4. Device for water treatment as claimed in any one of the preceding claims, **characterised in that** the pump (8) comprises a rotor disc (32) which can be moved via an electric motor (6) arranged in an hermetically sealed section of the housing.

5. Device for water treatment as claimed in any one of the preceding claims, **characterised in that** the device conveys water through the cartridge (3) with the ion exchange material after activation for a predetermined length of time, and/or **in that** the device comprises a display unit which signals when it is necessary to change the cartridge (3) with the ion exchange material, and/or in that the device comprises electrodes for measuring the conductivity of the water.

6. Device for water treatment as claimed in any one of the preceding claims, **characterised in that** the housing comprises an aperture (26) into which the cartridge (3) can be inserted, wherein the cartridge comprises a housing lower part (38) which, in plan view, occupies a larger area than an adjoining housing upper part (39), wherein at least one inlet and/or outlet (36, 37) is arranged in the housing lower part (38).

7. Device for water treatment as claimed in any one of the preceding claims, **characterised in that** the housing (2) can be secured to a wall (23) by means of magnetic force opposite a holder (10) arranged on another side of the wall.

8. Device for water treatment as claimed in the preceding claim, **characterised in that** the holder (10) comprises a mains power connection and means for inductively charging a battery (7) arranged in the housing (2).

9. Device for water treatment as claimed in any one of the preceding claims, **characterised in that** the device comprises an ultra-filter (15) which, as seen in the flow direction of the water, is arranged downstream of the cartridge (3) with the ion exchange material.

10. Tank (22) of a machine for preparing hot drinks, comprising a device for water treatment as claimed in any one of the preceding claims.

11. Pot (13) for storing water, comprising a device for water treatment as claimed in any one of the preceding claims.

12. Pot (13) as claimed in the preceding claim, **characterised in that** the pot comprises a funnel into which the device for water treatment is inserted.

13. Use of a device as claimed in claim 1 in a domestic water filter, wherein the device is inserted into a funnel of the domestic water filter, and the water is conveyed through the device actively by the funnel.

14. Use of a device as claimed in claim 1 in a tank of a machine for preparing hot drinks, wherein the device is submerged in the tank, and wherein the housing is secured to a wall, in that it is attached by means of magnetic force opposite a holder arranged on the other side of the wall.

## Revendications

1. Dispositif de traitement d'eau (1), comportant un boîtier (2), lequel est conçu pour pouvoir être entièrement enfoncé dans l'eau, une cartouche (3) interchangeable insérée dans le boîtier (2) et comprenant un matériau échangeur d'ions ainsi qu'une pompe (8) et une alimentation en énergie pour la pompe (8), laquelle comporte un accumulateur d'énergie agencé dans le boîtier (2), dans lequel de l'eau peut être refoulée à travers la cartouche (3) comprenant le matériau échangeur d'ions au moyen de la pompe (8), dans lequel la pompe (8) présente des moyens de refoulement, qui peuvent être actionnés par l'intermédiaire de moyens d'entraînement agencés dans une partie fermée hermétiquement du boîtier.

2. Dispositif de traitement d'eau selon la revendication précédente, le dispositif étant **caractérisé en ce qu'**il comprend une batterie (7) agencée dans le boîtier (2), laquelle peut être chargée par induction.

3. Dispositif de traitement d'eau selon l'une quelconque des revendications précédentes, le dispositif étant **caractérisé en ce qu'**il est conçu pour être enfoncé dans le réservoir (22) d'une machine de préparation de boissons chaudes et/ou dans un pot (13) pour la conservation de l'eau dans le foyer.

4. Dispositif de traitement d'eau selon l'une quelconque des revendications précédentes, **caractérisé en ce que** la pompe (8) comprend une roue à aubes (32), laquelle peut être déplacée par un moteur électrique (6) agencé dans une partie fermée hermétiquement du boîtier.

5. Dispositif de traitement d'eau selon l'une quelconque des revendications précédentes, le dispositif étant **caractérisé en ce que**, après avoir été activé pendant un laps de temps prédéfini, il refoule l'eau à travers la cartouche (3) comprenant le matériau échangeur d'ions et/ou en ce qu'il comporte un système d'affichage, lequel signale un remplacement nécessaire de la cartouche (3) comprenant le matériau échangeur d'ions et/ou **en ce qu'**il comprend des électrodes destinées à mesurer la conductivité de l'eau.

6. Dispositif de traitement d'eau selon l'une quelconque des revendications précédentes, **caractérisé en ce que** le boîtier présente un évidement (26) dans lequel la cartouche (3) peut être insérée, la cartouche comprenant une partie inférieure de boîtier (38), laquelle occupe en vue en élévation une surface plus importante qu'une partie supérieure de boîtier (39) adjacente, au moins une entrée et/ou une sortie (36, 37) étant agencées dans la partie inférieure de boîtier (38).

7. Dispositif de traitement d'eau selon l'une quelconque des revendications précédentes, **caractérisé en ce que** le boîtier (2) peut être fixé à une paroi (23) au moyen d'une force magnétique en vis-à-vis d'un support (10) agencé sur une autre face de la paroi.

8. Dispositif de traitement d'eau selon l'une quelconque des revendications précédentes, **caractérisé en ce que** le support (10) comprend un raccord au réseau électrique ainsi que des moyens pour la charge par induction d'une batterie (7) agencée dans le boîtier (2).

9. Dispositif de traitement d'eau selon l'une quelconque des revendications précédentes, le dispositif étant **caractérisé en ce qu'**il comprend un ultrafiltre (15), lequel, vu dans le sens d'écoulement de l'eau, est agencé en aval de la cartouche (3) comprenant le matériau échangeur d'ions.

10. Réservoir (22) d'une machine de préparation de boissons chaudes, comprenant un dispositif de traitement d'eau selon l'une quelconque des revendications précédentes.

11. Pot (13) pour le traitement d'eau, comprenant un dispositif de traitement d'eau selon l'une quelconque des revendications précédentes.

12. Pot (13) selon l'une quelconque des revendications précédentes, le pot étant **caractérisé en ce qu'**il comporte un entonnoir, dans lequel le dispositif de traitement d'eau est inséré.

13. Utilisation d'un dispositif selon la revendication 1 dans un filtre à eau domestique, le dispositif étant inséré dans un entonnoir du filtre à eau domestique, et l'eau étant refoulée activement à travers l'entonnoir par le dispositif.

14. Utilisation d'un dispositif selon la revendication 1 dans un réservoir d'une machine de préparation de boissons chaudes, le dispositif étant enfoncé dans le réservoir et le boîtier étant fixé à une paroi, par le fait qu'il est monté au moyen d'une force magnétique en vis-à-vis d'un support agencé sur l'autre face de la paroi.
